# EUROPÄISCHE PATENTSCHRIFT

(11) **EP 2 305 580 B1**
(45) Veröffentlichungstag und Bekanntmachung des Hinweises auf die Patenterteilung: **20.08.2014**
(21) Anmeldenummer: 10010039.5
(22) Anmeldetag: 21.09.2010
(51) Int. Cl.: B65G 1/14

(54) **Stapelsäule**
Stacking column
Colonne d'empilage

(30) Priorität: 05.10.2009 DE 102009048197; 05.11.2009 DE 102009052126
(43) Veröffentlichungstag der Anmeldung: 06.04.2011
(73) Patentinhaber: MTS Maschinenbau GmbH, 88512 Mengen (DE)
(72) Erfinder: Strobel, Gustav, 88348 Bad Saulgau (DE)
(74) Vertreter: Arat, Dogan

(56) Entgegenhaltungen:
- EP-A1- 0 613 837
- WO-A1-03/035517
- WO-A2-2005/012142
- DE-U1-202009 006 057
- FR-A1- 2 599 696

## Beschreibung

### TECHNISCHES GEBIET

Die Erfindung betrifft eine Stapelsäule zum Halten von Lagergut mittels Klinken nach dem Oberbegriff von Anspruch 1.

### STAND DER TECHNIK

Stapelsäulen sind in vielfältiger Form und Ausführung bekannt und auf dem Markt. Sie dienen in der Regel dazu, Lagergüter, insbesondere Karosserieteile, nach deren Herstellung in z.B. einer Presse aufzunehmen und zu weiteren Bearbeitungsstationen zu transportieren. Die Funktion der Stapelsäulen ist meist die gleiche. Wird das zu lagernde Werkstück in ein Gestell aus mehreren Stapelsäulen eingebracht, so schwenken die untersten Klinkenhebel bei Auflage der Formstücke in eine Arbeitsposition, wobei die Klinkenhebel jeweils einen nachfolgenden Klinkenhebel aus einer Ruhelage in eine Bereitschaftsposition mitnehmen. Das nächste einzubringende Formstück bringt den nachfolgenden Klinkenhebel aus der Bereitschaftsposition in die Arbeitsposition, in der die Klinken das Formstück halten, und die nachfolgende Klinke in Bereitschaftsposition.

Meist handelt es sich dabei um vertikale Stapelsäulen, wie sie beispielsweise in der DE 38 11 310 C2 gezeigt sind. Dabei befinden sich an Säulen übereinander drehbar gelagerte zweiarmige Klinkenhebel, die jeweils einen ein Lagergut aufnehmenden Tragarm sowie einen Steuerarm aufweisen und aus einer Ruhestellung über eine Bereitschaftsstellung in eine Arbeitsstellung und wieder zurück verschwenkbar sind, wobei beim Auflegen eines Lagergutes ein in Bereitschaftsstellung befindlicher Klinkenhebel in seine Arbeitsstellung gelangt und gleichzeitig ein darüber angeordneter Klinkenhebel durch den Steuerarm des in Arbeitsstellung gelangenden Klinkenhebels aus seiner Ruhestellung in seine Bereitschaftsstellung geschwenkt wird, wobei ferner sich die in Arbeitsstellung befindlichen Klinkenhebel gegenseitig in dieser Stellung verriegeln.

Aus der WO 2005/012142 A2 ist eine Stapelsäule zum Halten von Ladegütern auf Tragarmen von Klinkenhebeln bekannt, die um eine Drehachse von einer Ruhestellung in einer Arbeitsstellung drehen, wobei mehrere Klinkenhebel übereinander oder nebeneinander angeordnet sind und in Wirkverbindung stehen. Dabei dreht mit dem Klinkenhebel ein Stützelement mit, welches in Arbeitsstellung auf oder an einem vorgängigen Klinkenhebel aufsitzt oder anliegt. Das Dokument WO 2005/012142 A2 offenbart den Oberbegriff von Anspruch 1.

### AUFGABE

Aufgabe der vorliegenden Erfindung ist es, eine Stapelsäule der oben genannten Art zu entwickeln, bei der auch eine sehr kleine Teilung möglich ist, das heisst, der Abstand der Klinken auf das Äusserste minimiert werden kann.

### LÖSUNG DER AUFGABE

Zur Lösung der Aufgabe führen die Merkmale nach dem kennzeichnenden Teil von Anspruch 1.

Im Gegensatz zu den aus dem Stand der Technik bekannten Stapelsäule besteht die Klinke jetzt nicht mehr aus einem Tragteil vor der Drehachse und einem Stütz - oder Gewichtsteil hinter der Drehachse, sondern nur noch aus einem Tragteil, welches an seinem hintersten Ende die Drehachse aufweist. Hierdurch ist es möglich, übereinander angeordnete Klinken mit geringster Teilung anzuordnen. Der notwendige Abstand wird im wesentlichen nur von dem Abstand bestimmt, den die Drehachsen voneinander einhalten müssen.

Bei dieser Ausgestaltung ergibt sich dann aber auch eine gänzlich andere Anforderung an die Wirkverbindung zwischen den einzelnen Klinken, denn nach wie vor soll die Möglichkeit bestehen, dass beim Schwenken einer Klinke in die Arbeitsstellung die nachfolgende Klinke in die Bereitschaftsstellung aus der Ruhelage mitgenommen wird. Verständlicherweise gibt es bei der Minimierung der Teilung auch nur einen geringen Platz für diese Wirkverbindung.

Gemäss der vorliegenden Erfindung sind für diese Wirkverbindung hebelartige Mitnehmer vorgesehen, die zusammen wirken. Beide Mitnehmer werden auf einer Drehachse angeordnet und können mit ihren jeweiligen Klinken um diese Drehachse drehen. Dabei ist an dem jeweils unteren Mitnehmer ein Anschlag angeordnet, der mit einer Steuerkante des oberen Mitnehmers zusammenwirkt. Beim Drehen der Klinke von der Ruhelage in die Bereitschaftsstellung bleibt der obere Mitnehmer in Ruhelage. Am Ende der Drehung in die Bereitschaftsstellung läuft jedoch der Anschlag der unteren Mitnehmers auf der Steuerkante des oberen Mitnehmers auf, so dass dann, wenn die untere Klinke in die Arbeitsteilung gedreht wird, der Anschlag den oberen Mitnehmer und damit die obere Klinke mitnimmt, die wiederum in die Bereitschaftsstellung gedreht wird.

### FIGURENBESCHREIBUNG

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
**Figur 1** eine Seitenansicht einer Mehrzahl von übereinander angeordneten Klinken, die in Wirkverbindung miteinander stehen;
**Figur 2** eine vergrössert dargestellte Draufsicht auf zwei zusammen wirkende Mitnehmer;
**Figur 3** eine Seitenansicht eines weiteren Ausführungsbeispiels einer Anordnung für übereinander angeordneten Klinken.

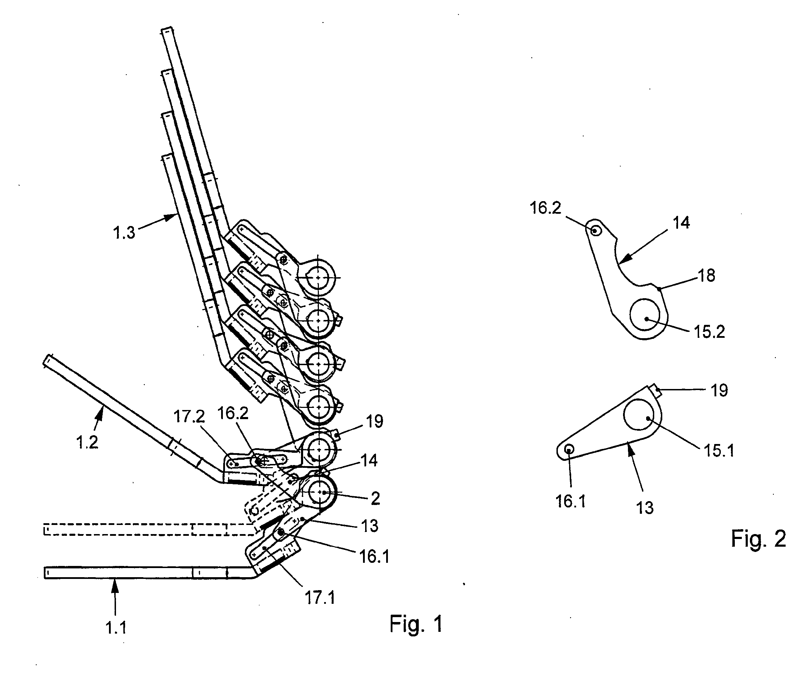

Gemäss den Figuren 1 bis 3 wird in einem weiteren Ausführungsbeispiel der Erfindung eine Wirkverbindung zwischen einzelnen Klinken 1.1, 1.2, 1.3 durch zwei Mitnehmer 13 und 14 bewirkt. Beide Mitnehmer sitzen auf der selben Drehachse 2, weshalb sie jeweils eine Drehöffnung 15.1 beziehungsweise. 15.2 aufweisen. Gegenüber der jeweiligen Drehöffnung 15.1 beziehungsweise 15.2 ragen von den Mitnehmern 13 bzw. 14 Bolzen 16.1 bzw. 16.2 ab, die in jeweilige Langlöcher 17.1 bzw. 17.2 eingreifen.

Des Weiteren besitzt der obere Mitnehmer 14 eine Steuerkante 18, die gegenüber der Drehöffnung 15.2 als Materialanhäufung hervorsteht. Mit der Steuerkante 18 wirkt ein Anschlag 19 an dem unteren Mitnehmer 13 zusammen und zwar in der Weise, dass der Anschlag 19, der hackenförmig das Ende des oberen Mitnehmers 14 umfasst, in einem weiten Bereich frei um den oberen Mitnehmer 14 drehen kann, jedoch bei dieser Drehung dann auf die Steuerkante 18 aufläuft und den oberen Mitnehmer 14 entgegen dem Uhrzeigersinn mitnimmt.

Die Funktionsweise der vorliegenden Erfindung ist folgende:
Die Klinke 1.1 befindet sich in Arbeitsstellung, wobei ein nicht näher gezeigtes Ladegut auf ihr aufliegt. Bei der Drehung von einer Bereitschaftsstellung in die Arbeitslage hat die Klinke 1.1 die nachfolgende Klinke 1.2 in Bereitschaftsstellung mitgenommen, da der Anschlag 19 auf die Steuerkante 18 aufgelaufen ist und so den oberen Mitnehmer 14 mitgeführt hat.

Wird nun ein Ladegut auf die Klinke 1.2 aufgelegt, so dreht diese Klinke 1.2 in die Arbeitsstellung und nimmt dabei über den Anschlag 19 den nachfolgenden Mitnehmer 14 mit, der wiederum die nachfolgende Klinke 1.3 in Bereitschaftsstellung schwenkt.

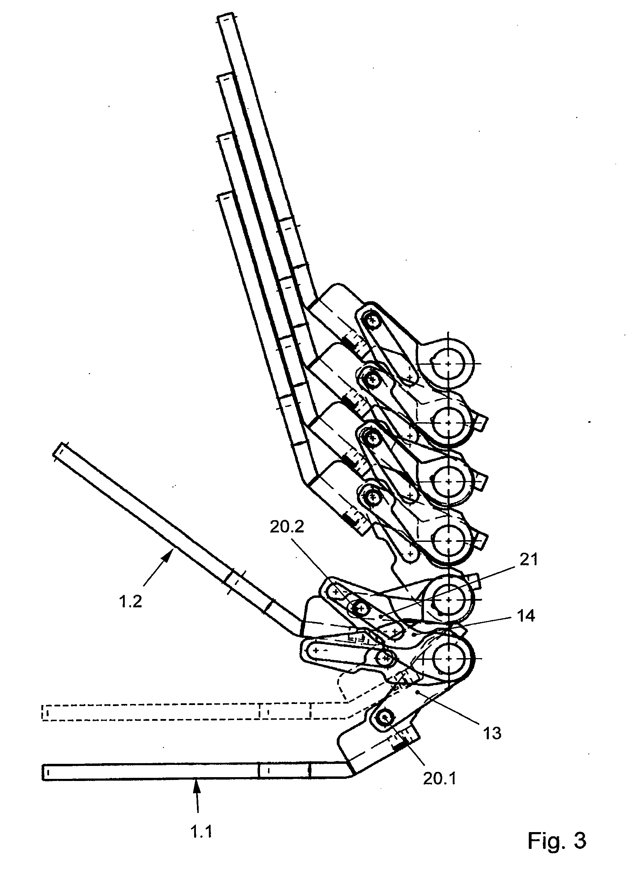

Das Ausführungsbeispiel der Erfindung gemäss Figur 3 unterscheidet sich von demjenigen nach den Figuren 1 und 2 nur dadurch, das in diesem Fall Langlöcher und Bolzen vertauscht sind. Der der unteren Klinke 1.1 zugeordnete Mitnehmer 13 weisst dabei eine feste Bolzenverbindung 20.1 mit dem unteren Mitnehmer 13 auf. Die nachfolgende Klinke 1.2 dagegen besitzt einen Bolzen 20.2, wobei dieser Bolzen 20.2 in einem Langloch 21 in dem oberen Mitnehmer 14 geführt ist. Die Funktionsweise entspricht aber derjenigen des Ausführungsbeispiels gemäss den Figuren 1 und 2.

**Bezugszeichenliste**

| | | | | | |
|---|---|---|---|---|---|
| 1 | Klinke | 34 | | 67 | |
| 2 | Drehachse | 35 | | 68 | |
| 3 | | 36 | | 69 | |
| 4 | Seitenwange | 37 | | 70 | |
| 5 | | 38 | | 71 | |
| 6 | | 39 | | 72 | |
| 7 | | 40 | | 73 | |
| 8 | | 41 | | 74 | |
| 9 | | 42 | | 75 | |
| 10 | | 43 | | 76 | |
| 11 | | 44 | | 77 | |
| 12 | | 45 | | 78 | |
| 13 | Mitnehmer | 46 | | 79 | |
| 14 | Mitnehmer | 47 | | | |
| 15 | Drehöffnung | 48 | | | |
| 16 | Bolzen | 49 | | | |
| 17 | Langloch | 50 | | | |
| 18 | Steuerkante | 51 | | | |
| 19 | Anschlag | 52 | | | |
| 20 | Bolzenverbindung | 53 | | | |
| 21 | Langloch | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Stapelsäule zum Halten von Lagergut mittels Klinken (1.1 bis 1.3), welche schwenkbar um eine Drehachse (2) von einer Ruhelage über eine Bereitschaftsstellung in eine Gebrauchslage an zumindest einer Seitenwange angeordnet sind, wobei
die Drehachse (2) an einem hinteren Ende (3) der Klinke (1.1 bis 1.4) angeordnet und vor der Drehachse (2) eine Wirkverbindung zwischen übereinander angeordneten Klinken vorgesehen ist, **dadurch gekennzeichnet, dass** die Wirkverbindung aus zwei Mitnehmern (13,14) besteht, die beide an der gleichen Drehachse (2) angeordnet sind und um diese drehen, wobei der untere Mitnehmer (13) drehfest mit der unteren Klinke (1.1) und der nach oben gerichtete Mitnehmer (14) mit der nachfolgenden Klinke (1.2) verbunden ist und der unteren Mitnehmer (13) einen Anschlag (19) aufweist, der bei Drehung der ihm zugeordneten Klinke in Gebrauchslage über den oberen Mitnehmer (14) die nachfolgende Klinke in Bereitschaftsstellung mitnimmt.

2. Stapelsäule nach Anspruch 1, **dadurch gekennzeichnet, dass** der Anschlag (19) ein von dem unteren Mitnehmer (13) abgebogener Haken ist, der auf eine Steuerkante (18) des oberen Mitnehmers (14) aufläuft.

3. Stapelsäule nach Anspruch 1 oder 2, **dadurch gekennzeichnet, dass** zumindest der obere Mitnehmer (14) in einem Langloch (17.2) in der nachfolgenden Klinke (1.2) geführt ist.

4. Stapelsäule nach Anspruch 3, **dadurch gekennzeichnet, dass** der Mitnehmer (14) mit einem Bolzen (16.2) in dem Langloch (17.2) geführt ist.

5. Stapelsäule nach Anspruch 3 oder 4, **dadurch gekennzeichnet, dass** auch der untere Mitnehmer (13) in einem Langloch (17.1) in der unteren Klinke (1.1) geführt ist.

6. Stapelsäule nach Anspruch 5, **dadurch gekennzeichnet, dass** der untere Mitnehmer (13) mit einem Bolzen (16.1) in dem Langloch (17.1) geführt ist.

7. Stapelsäule nach Anspruch 1 oder 2, **dadurch gekennzeichnet, dass** von den Klinken jeweils ein Bolzen (20.1, 20.2) abragt, der in einem Langloch (21) des unteren beziehungsweise des oberen Mitnehmers (13,14) geführt ist.

8. Stapelsäulen nach wenigstens einem der Ansprüche 1 bis 7, **dadurch gekennzeichnet, dass** von den Klinken zumindest einseitig Seitenwangen (4) aufragen.

## Claims

1. A stacking column for holding stored articles by means of pawls (1.1 to 1.3) which are arranged to be pivotable about a rotation spindle (2) from an inoperative position via a ready position into a use position on at least one side wall, wherein
the rotation spindle (2) is arranged on a rear end (3) of the pawl (1.1 to 1.4) and an operative connection between pawls which are arranged one above another is provided before the rotation spindle (2), **characterised in that** the operative connection consists of two entraining means (13, 14), both of which are arranged on the same rotation spindle (2) and rotate about it, the lower entraining means (13) being connected in rotation-resistant manner to the lower pawl (1.1) and the upward-directed entraining means (14) being connected to the following pawl (1.2), and the lower entraining means (13) having a stop (19) which upon rotation of the pawl associated therewith into the use position entrains the following pawl into the ready position via the upper entraining means (14).

2. A stacking column according to Claim 1, **characterised in that** the stop (19) is a hook which is bent off from the lower entraining means (13) and which runs onto a control edge (18) of the upper entraining means (14).

3. A stacking column according to Claim 1 or 2, **characterised in that** at least the upper entraining means (14) is guided in an elongate hole (17.2) in the following pawl (1.2).

4. A stacking column according to Claim 3, **characterised in that** the entraining means (14) is guided in the elongate hole (17.2) with a pin (16.2).

5. A stacking column according to Claim 3 or 4, **characterised in that** the lower entraining means (13) is also guided in an elongate hole (17.1) in the lower pawl (1.1).

6. A stacking column according to Claim 5, **characterised in that** the lower entraining means (13) is guided in the elongate hole (17.1) with a pin (16.1).

7. A stacking column according to Claim 1 or 2, **characterised in that** in each case a pin (20.1, 20.2) projects from the pawls, which pin is guided in an elongate hole (21) of the lower or the upper entraining means (13, 14) respectively.

8. Stacking columns according to at least one of Claims 1 to 7, **characterised in that** side walls (4) project from the pawls at least on one side.

## Revendications

1. Colonne d'empilage pour maintenir des objets à entreposer au moyen de poignées (1.1 à 1.3) disposées de manière pivotable autour d'un axe de rotation (2) d'une position de repos, par l'intermédiaire d'une position de mise à disposition, en une position d'utilisation, au moins sur une joue latérale, dans laquelle
l'axe de rotation (2) est disposé à une extrémité arrière (3) de la poignée (1.1 à 1.4) et devant l'axe de rotation (2) est prévue une connexion active entre des poignées superposées,
**caractérisée par le fait que** la connexion active est composée de deux tocs d'entraînement (13, 14) disposés tous deux sur le même axe de rotation (2) et tournant autour de ce dernier, le toc d'entraînement inférieur (13) étant solidaire en rotation de la poignée inférieure (1.1) et le toc d'entraînement orienté vers le haut (14) étant connecté à la poignée suivante (1.2) et le toc d'entraînement inférieur (13) présentant une butée (19) qui, lors de la rotation de la poignée lui associée en position d'utilisation entraîne, par l'intermédiaire du toc d'entraînement supérieur (14), la poignée suivante en position de mise à disposition.

2. Colonne d'empilage selon la revendication 1, **caractérisée par le fait que** la butée (19) est un crochet recourbé du toc d'entraînement inférieur (13) qui monte sur une arête de commande (18) du toc d'entraînement supérieur (14).

3. Colonne d'empilage selon la revendication 1 ou 2, **caractérisée par le fait qu'**au moins le toc d'entraînement supérieur (14) est guidé dans un trou oblong (17.2) dans la poignée suivante (1.2).

4. Colonne d'empilage selon la revendication 3, **caractérisée par le fait que** le toc d'entraînement (14) avec un boulon (16.2) est guidé dans le trou oblong (17.2).

5. Colonne d'empilage selon la revendication 3 ou 4, **caractérisée par le fait que** le toc d'entraînement inférieur (13) est guidé dans un trou oblong (17.1) dans la poignée inférieure (1.1).

6. Colonne d'empilage selon la revendication 5, **caractérisée par le fait que** le toc d'entraînement inférieur (13) avec un boulon (16.1) est guidé dans le trou oblong (17.1).

7. Colonne d'empilage selon la revendication 1 ou 2, **caractérisée par le fait que** des poignées ressort chaque fois un boulon (20.1, 20.2) qui est guidé dans un trou oblong (21) du toc d'entraînement inférieur ou supérieur (13, 14).

8. Colonne d'empilage selon au moins l'une des revendications 1 à 7, **caractérisée par le fait que** des poignées remontent, au moins d'un côté, des joues latérales (4).
